# EUROPÄISCHE PATENTSCHRIFT

(11) **EP 0 521 172 B1**
(45) Veröffentlichungstag und Bekanntmachung des Hinweises auf die Patenterteilung: **31.01.1996**
(21) Anmeldenummer: 91110109.5
(22) Anmeldetag: 20.06.1991
(51) Int. Cl.: G06K 7/08

(54) **Vorrichtung zum Beschreiben und/oder Lesen von Magnetkarten**
Apparatus for reading and/or writing on a magnetic card
Appareil de lecture et/ou écriture d'une carte magnétique

(43) Veröffentlichungstag der Anmeldung: 07.01.1993
(73) Patentinhaber: SCHEIDT & BACHMANN GMBH, D-41238 Mönchengladbach (DE)
(72) Erfinder: Miller, Gert, Dipl.-Ing., W-4050 Mönchengladbach 1 (DE); Höffges, Peter, Dipl.-Ing., W-4050 Mönchengladbach 5 (DE)
(74) Vertreter: Stenger, Watzke & Ring Patentanwälte

(56) Entgegenhaltungen:
- EP-A- 0 134 110
- FR-A- 2 639 450
- JP-A-53 149 908
- JP-A-63 256 211
- US-A- 4 777 540

## Beschreibung

Die Erfindung betrifft eine Vorrichtung zum Beschreiben und/oder Lesen von Magnetkarten mit einem Kartenschacht, in dem mindestens zwei, jeweils mit einer federbelasteten Druckrolle zusammenwirkende Antriebsrollen angeordnet sind, und mindestens einem Lese- und Schreibkopf wobei der Lesekopf räumlich vom Schreibkopf getrennt und in der Einzugsrichtung der Magnetkarte der Lesekopf vor dem Schreibkopf angeordnet ist.

Vorrichtungen der voranstehend beschriebenen Art sind bekannt aus JP-A-55.076.475. Sie besitzen meistens einen kombinierten Lese-Schreib-Kopf, der äußerst lagegenau im Kartenschacht justiert werden muß, um die in der Magnetspur der Magnetkarte gespeicherten Informationen korrekt lesen bzw. schreiben zu können.

Der Erfindung liegt die **Aufgabe** zugrunde, eine Vorrichtung der eingangs beschriebenen Art derart weiterzubilden, daß auch bei seitlichen Abweichungen und Winkelabweichungen der Karte und deren Magnetspur innerhalb des Kartenschachtes die Informationen noch einwandfrei gelesen bzw. auf die Magnetspur der Magnetkarte geschrieben werden können, so daß mit der Vorrichtung auch Magnetkarten verarbeitet werden können, die größere Toleranzen aufweisen.

Die **Lösung** dieser Aufgabenstellung durch die Erfindung ist dadurch gekennzeichnet, daß der aktive Lesebereich des Lesekopfes schmaler als der aktive Schreibbereich des Schreibkopfes ausgebildet ist.

Mit dieser erfindungsgemäßen Weiterbildung wird der Vorteil erreicht, daß seitliche und Winkelabweichungen der Karte und deren Magnetspur weniger kritisch sind. Die vom Schreibkopf geschriebenen Informationen können bei der Rückgabe der Magnetkarte vor deren Ausgabe vom Lesekopf gelesen und damit kontrolliert werden, wobei es weiterhin möglich ist, die spezielle Art des Schreibkopfes unabhängig vom jeweils verwendeten Lesekopf zu wählen. Da der aktive Lesebereich des Lesekopfes in jedem Fall schmaler als der aktive Schreibbereich des Schreibkopfes ist, erfaßt der Lesekopf auch bei seitlichen oder Winkelabweichungen der Karte einen klar erkennbaren Bereich der auf dem Magnetstreifen aufgebrachten Information, so daß Lageabweichungen der Magnetkarte und deren Magnetspur erheblich weniger kritisch sind als bei den bekannten Vorrichtungen.

Gemäß einem weiteren Merkmal der Erfindung wird für eine mit an beiden Enden des Kartenschachtes angeordneten Infrarot-Reflexlichtschranken zur Erfassung der Kartenposition ausgestattete Vorrichtung vorgeschlagen, zwischen den beiden Infrarot-Reflexlichtschranken eine dritte, im sichtbaren Spektralbereich arbeitende Reflexlichtschranke zur Erkennung von sichtbaren Druckmarken und optischen Sicherheitscodes anzuordnen, so daß die Sicherheit bei der Verarbeitung von Magnetkarten erhöht wird.

Um zu verhindern, daß außer Magnetkarten keine anderen Wertkarten in den Kartenschacht eingezogen werden, kann neben der Infrarot-Reflexlichtschranke am Anfang des Kartenschachtes ein auf den Bereich des Magnetstreifens der Magnetkarte ausgerichteter Magnetsensor zur Erkennung des Vorhandenseins einer Magnetkarte angeordnet werden.

Mit der Erfindung wird schließlich vorgeschlagen, den Antriebsmotor für die Antriebsrollen im Kartenschacht als Schrittmotor auszubilden. Hierdurch wird eine gleichförmige Transportbewegung der Magnetkarten im Kartenschacht und eine genauere Positionierung der Magnetkarte zwecks Verbesserung der Schreib- und Lesequalität erreicht. Durch die Erfassung der Kartenposition mit Hilfe der Infrarot-Reflexlichtschranke und der exakten Weiterführung der Karte durch den Schrittmotor ist es möglich, die Karte beim Herausgeben aus der Vorrichtung an den Benutzer mit der vorderen Antriebsrolle 5 so festzuhalten, daß sie nicht herausfällt und ggf. wieder zur Bearbeitung in die Vorrichtung eingezogen werden kann.

Auf der Zeichnung ist ein Ausführungsbeispiel der erfindungsgemäßen Vorrichtung zum Beschreiben und/oder Lesen von Magnetkarten dargestellt, und zwar zeigen:
- Fig. 1: eine Seitenansicht der Vorrichtung,
- Fig. 2: eine Draufsicht auf die Vorrichtung nach Fig. 1 und

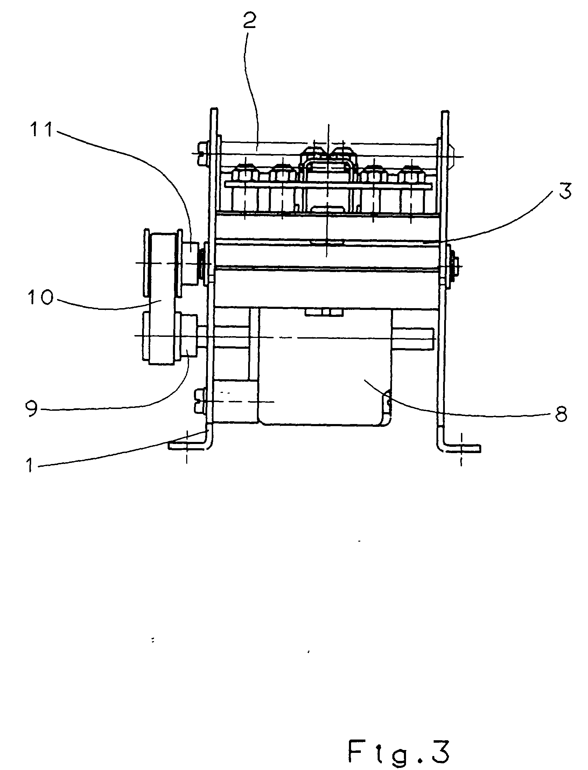

- Fig. 3: eine Stirnansicht der Vorrichtung nach den Fig. 1 und 2.

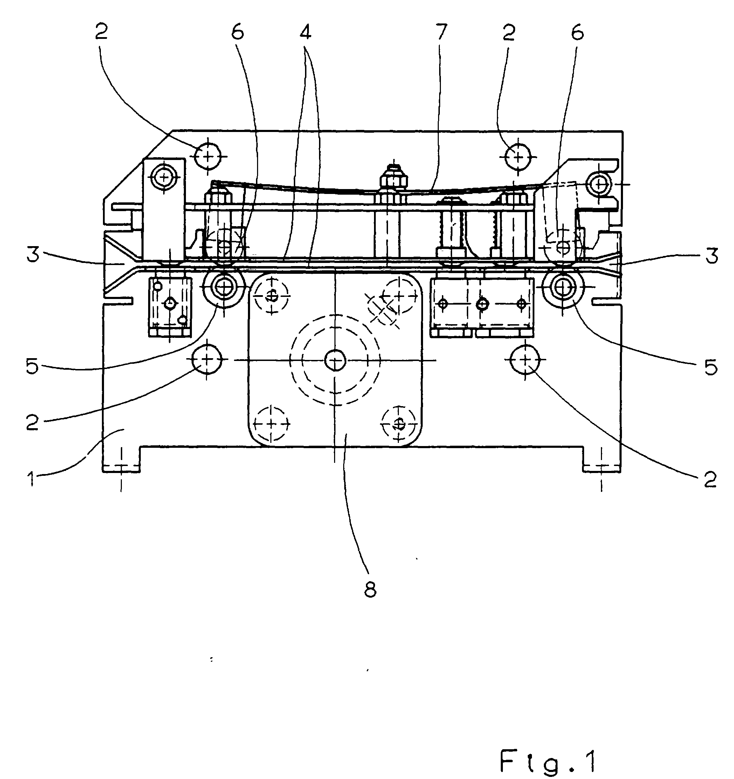

Die zum Beschreiben und/oder Lesen von Magnetkarten dienende Vorrichtung umfaßt zwei Seitenwände 1, die durch Distanzstangen 2 miteinander im Abstand verbunden sind. Innerhalb des hierdurch gebildeten Gehäuses ist ein Kartenschacht 3 durch Führungsbleche 4 ausgebildet, der am besten in Fig. 1 zu erkennen.

In diesen Kartenschacht 3 ragen von unten zwei Antriebsrollen 5 hinein, welche jeweils mit einer oberhalb des Kartenschachtes 3 frei drehbar gelagerten Andruckrolle 6 zusammenwirken. Beide Andruckrollen 6 werden in Richtung auf die zugehörige Antriebsrolle 5 durch eine gemeinsame Andrückfeder 7 belastet.

Der Antrieb der Antriebsrollen 5 erfolgt durch einen Schrittmotor 8, auf dessen Welle ein Antriebsritzel 9 für einen Zahnriemen 10 befestigt ist. Der Zahnriemen 10 ist über zwei Zahnriemenritzel 11 geführt, die jeweils auf der Welle der Antriebsrollen 5 befestigt sind. Um eine gleichmäßige Spannung des Zahnriemens 10 zu erzielen, ist schließlich eine Spannrolle 12 vorgesehen. Mit Hilfe des voranstehend beschriebenen Antriebes kann eine auf der Zeichnung nicht dargestellte Magnetkarte mit gleichförmiger Bewegung in beiden Richtungen innerhalb des Kartenschachtes 3 transportiert werden.

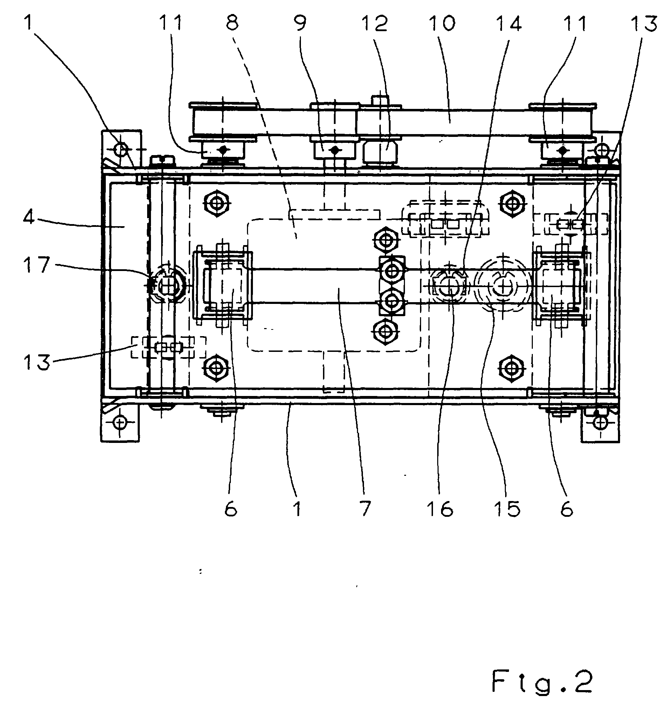

Um die jeweilige Position der Magnetkarte innerhalb des Kartenschachtes 3 zu erfassen, ist an jedem Ende des Kartenschachtes 3 eine Infrarot-Reflexlichtschranke 13 angeordnet, und zwar seitlich aus der Längsmitte des Kartenschachtes 3 herausversetzt, die am besten die Fig. 2 erkennen läßt. In der Längsmitte des Kartenschachtes 3 sind ein Lesekopf 14 und ein Schreibkopf 15 angeordnet, wobei sich der Lesekopf 14 in Einzugsrichtung der Magnetkarte vor dem Schreibkopf 15 befindet. Durch diese räumliche Trennung von Lesekopf 14 und Schreibkopf 15 besteht nicht nur die Möglichkeit, den jeweils für die Aufgabe am besten geeigneten Lese- bzw. Schreibkopf auszuwählen, sondern die vom Schreibkopf 15 auf den Magnetschreifen der jeweiligen Magnetkarte geschriebenen Informationen während der Rückgabe der Magnetkarte durch den Lesekopf 14 zu lesen und auf diese Weise eine Kontrolle der geschriebenen Informationen durchzuführen.

Der aktive Lesebereich des Lesekopfes 14 ist schmaler ausgeführt als der aktive Schreibbereich des Schreibkopfes 15, so daß auch bei seitlichen Verlagerungen der Magnetkarte bzw. des Magnetstreifens und bei Winkelabweichungen der Magnetkarte innerhalb des Kartenschachtes 3 vom Lesekopf 14 stets ein Bereich der auf dem Magnetstreifen untergebrachten Informationen erfaßt wird, der eine einwandfreie Identifikation dieser Informationen gewährleistet.

Um auf der Magnetkarte auch sichtbare Druckmarken und ggf. optische Sicherheitscodes erkennen zu können, ist zwischen den beiden Infrarot-Reflexlichtschranken 13 eine weitere Reflexlichtschranke 16 angeordnet, die im sichtbaren Spektralbereich arbeitet. Schließlich ist neben der Infrarot-Reflexlichtschranke 13 am Anfang des Kartenschachtes 3 ein auf den Bereich des Magnetstreifens der Magnetkarte ausgerichteter Magnetsensor 17 vorgesehen, der verhindert, daß außer Magnetkarten andere Karten in den Kartenschacht 3 eingezogen werden.

### Bezugszeichenliste :

- 1: Seitenwand
- 2: Distanzstange
- 3: Kartenschacht
- 4: Führungsblech
- 5: Antriebsrolle
- 6: Andruckrolle
- 7: Andrückfeder
- 8: Schrittmotor
- 9: Antriebsritzel
- 10: Zahnriemen
- 11: Zahnriemenritzel
- 12: Spannrolle
- 13: Infrarot-Reflexlichtschranke
- 14: Lesekopf
- 15: Schreibkopf
- 16: Reflexlichtschranke
- 17: Magnetsensor

## Patentansprüche

1. Vorrichtung zum Beschreiben und/oder Lesen von Magnetkarten mit einem Kartenschacht, in dem mindestens zwei, jeweils mit einer federbelasteten Druckrolle zusammenwirkende Antriebsrollen angeordnet sind, und mindestens einem Lese- und Schreibkopf, wobei der Lesekopf (14) räumlich vom Schreibkopf (15) getrennt und in der Einzugsrichtung der Magnetkarte der Lesekopf (14) vor dem Schreibkopf (15) angeordnet ist
**dadurch gekennzeichnet,**
daß der aktive Lesebereich des Lesekopfes (14) schmaler als der aktive Schreibbereich des Schreibkopfes (15) ausgebildet ist.

2. Vorrichtung nach Anspruch 1 mit an beiden Enden des Kartenschachtes angeordneten Infrarot-Reflexlichtschranken zur Erfassung der Kartenposition, dadurch gekennzeichnet, daß zwischen den beiden Infrarot-Reflexlichtschranken (13) eine dritte, im sichtbaren Spektralbereich arbeitende Reflexlichtschranke (16) zur Erkennung von sichtbaren Druckmarken und optischen Sicherheitscodes angeordnet ist.

3. Vorrichtung nach Anspruch 1 oder 2, dadurch gekennzeichnet, daß neben der Infrarot-Reflexlichtschranke (13) am Anfang des Kartenschachtes (3) ein auf den Bereich des Magnetstreifens der Magnetkarte ausgerichteter Magnetsensor (17) zur Erkennung des Vorhandenseins einer Magnetkarte angeordnet ist.

4. Vorrichtung nach Anspruch 1, dadurch gekennzeichnet, daß der Antriebsmotor für die Antriebsrollen (5) als Schrittmotor (8) ausgebildet ist.

## Claims

1. Device for writing and/or reading magnetic cards, having a card slot in which there are arranged at least two drive rollers, each cooperating with a spring-loaded pressure roller, and having at least one reading and writing head, the reading head (14) being arranged spatially separately from the writing head (15) and the reading head (14) being arranged upstream of the writing head (15) in the drawing-in direction of the magnetic card, characterized in that the active reading region of the reading head (14) is of narrower design than the active writing region of the writing head (15).

2. Device according to Claim 1, having infrared reflective light barriers, arranged at both ends of the card slot, for detecting the card position, characterized in that there is arranged between the two infrared reflective light barriers (13) a third reflective light barrier (16), operating in the visible spectral range, for the detection of visible printed marks and optical security codes.

3. Device according to Claim 1 or 2, characterized in that, alongside the infrared reflective light barrier (13) at the start of the card slot (3), there is arranged a magnetic sensor (17), directed towards the region of the magnetic strip of the magnetic card, for the detection of the presence of a magnetic card.

4. Device according to Claim 1, characterized in that the drive motor of the drive rollers (5) is designed as a stepping motor (8).

## Revendications

1. Dispositif d'écriture et/ou de lecture de cartes magnétiques, comprenant un couloir à carte, dans lequel sont disposés au moins deux galets d'entraînement coopérant chacun avec un galet de pression à sollicitation élastique, et au moins une tête de lecture et une tête d'écriture, la tête de lecture (14) étant séparée spatialement de la tête d'écriture (15), et la tête de lecture (14) étant disposée avant la tête d'écriture (15) dans la direction d'introduction de la carte magnétique, caractérisé en ce que la zone active de lecture de la tête de lecture (14) est plus étroite que la zone active d'écriture de la tête d'écriture (15).

2. Dispositif selon la revendication 1, comportant des barrières infrarouges à lumière réfléchie aux deux extrémités du couloir à carte aux fins de détecter la position de la carte, caractérisé en ce que, entre les deux barrières infrarouges à lumière réfléchie (13), est placée une troisième barrière à lumière réfléchie (16) fonctionnant dans la plage spectrale visible afin de détecter des marquages imprimés visibles et des codes de sécurité optiques.

3. Dispositif selon la revendication 1 ou 2, caractérisé en ce que, en plus de la barrière infrarouge à lumière réfléchie (13), au début du couloir (3), est implanté un capteur magnétique (17) orienté en direction de la zone de la bande magnétique de la carte magnétique afin de détecter la présence d'une carte magnétique

4. Dispositif selon la revendication 1, caractérisé en ce que le moteur d'entraînement des galets d'entraînement (5) est conçu sous la forme d'un moteur pas à pas (8).
